# EUROPÄISCHE PATENTSCHRIFT

(11) **EP 3 727 107 B1**
(45) Veröffentlichungstag und Bekanntmachung des Hinweises auf die Patenterteilung: **10.11.2021**
(21) Anmeldenummer: 19705297.0
(22) Anmeldetag: 05.02.2019
(51) Int. Cl.: A47J 31/40, A47J 31/44

(54) **VORRICHTUNG UND VERFAHREN ZUR HERSTELLUNG EINES BRÜHGETRÄNKS**
DEVICE AND METHOD FOR PRODUCING A BREWED BEVERAGE
DISPOSITIF ET PROCÉDÉ DE PRÉPARATION D'UNE BOISSON INFUSÉE

(30) Priorität: 07.03.2018 DE 102018105213
(43) Veröffentlichungstag der Anmeldung: 28.10.2020
(73) Patentinhaber: Melitta Single Portions GmbH & Co. KG, 32425 Minden (DE)
(72) Erfinder: PAHNKE, Jan, 32427 Minden (DE)
(74) Vertreter: Dantz, Jan Henning
(86) Internationale Anmeldenummer: PCT/EP2019/052737
(87) Internationale Veröffentlichungsnummer: WO 2019/170337

(56) Entgegenhaltungen:
- EP-A1- 2 112 093
- EP-A1- 3 166 452
- US-A1- 2017 252 991

## Beschreibung

Die vorliegende Erfindung betrifft eine Vorrichtung zur Herstellung eines Brühgetränks, mit einer Brühkammer, die einen Zulauf für heißes Wasser und einen Ablauf aufweist, wobei an dem Ablauf ein Verschlusselement vorgesehen ist, mittels dem der Ablauf geöffnet oder geschlossen werden kann, und die Brühkammer eine seitliche Öffnung aufweist, an der eine Kapsel mit einem Extraktionsmaterial abgedichtet anlegbar ist, um eine Fluidverbindung zwischen einem Innenraum der Kapsel und einem Innenraum der Brühkammer herzustellen, sowie ein Verfahren zur Herstellung eines Brühgetränkes.

Die EP 2 159 167 A1 offenbart eine Vorrichtung zur Herstellung eines Brühgetränkes, bei der eine Kapsel an einer seitlichen vertikalen Öffnung einer Brühkammer positioniert wird. Die Kapsel wird für einen Brühvorgang am Boden perforiert, und heißes Wasser wird über eine Injektionsnadel in die Kapsel und dann in die Brühkammer eingeleitet. Wenn zur Herstellung des Brühgetränkes der Flüssigkeitspegel oberhalb der Injektionsnadel angeordnet ist, kann es zu Dichtigkeitsproblemen im Bereich der Perforation kommen. Zudem muss nach dem Brühvorgang die Kapsel über eine Auswerfmechanik von der seitlichen Öffnung gelöst werden, was vergleichsweise aufwändig ist.

In der DE 10 2014 109 760 A1 wurde daher vorgeschlagen, an einer Oberseite der Brühkammer einen Einlass zum Einleiten von heißem Wasser vorzusehen. In der Brühposition ist die Kapsel an einer vertikalen Öffnung der Brühkammer angeordnet, und bei Ausgabe des Brühgetränkes strömt die Flüssigkeit von der Kapsel zu einem unteren Bereich der Brühkammer zu einem Ablauf. Da das Extraktionsmaterial auch während der Ausgabe des Brühgetränkes noch länger mit Flüssigkeit benetzt ist, kann am Ende des Ausgabevorganges eine größere Menge an Bitterstoffen in das Brühgetränk gelangen als zu Beginn der Ausgabe, da das Extraktionsmaterial noch längere Zeit mit einer Restflüssigkeit benetzt ist, die zeitverzögert zu dem Ablauf geleitet wird. Dies kann zu einer geschmacklichen Beeinträchtigung führen. Zudem besitzt die Kapsel mit dem Extraktionsmaterial ein geringes Eigengewicht, und dies kann zu Problemen beim Entfernen der Kapsel von der Brühposition führen.

Es ist daher Aufgabe der vorliegenden Erfindung, eine Vorrichtung und ein Verfahren zur Herstellung eines Brühgetränkes zu schaffen, die eine exakte Einstellung einer Brühzeit des Extraktionsmaterials ermöglichen und eine einfache Handhabung beim Entfernen der Kapsel aus der Brühposition gewährleisten.

Diese Aufgabe wird mit einer Vorrichtung mit den Merkmalen des Anspruches 1 sowie einem Verfahren mit den Merkmalen des Anspruches 10 gelöst.

Bei der erfindungsgemäßen Vorrichtung wird eine Kapsel in einer Brühposition an einer seitlichen Öffnung einer Brühkammer abgedichtet angelegt, um eine Fluidverbindung zwischen einem Innenraum der Kapsel und der Brühkammer herzustellen, wobei ein Rand der seitlichen Öffnung eine Ebene ausbildet, die geneigt zur Vertikalen ausgerichtet ist. Dadurch kann bei Beenden des Brühvorganges und der Ausgabe des Brühgetränkes die Ziehzeit exakt eingestellt werden, indem ein zeitverzögertes Nachlaufen von Restflüssigkeit aus der Kapsel verringert oder vermieden wird. Zudem kann durch die Neigung der Kapsel im Hinblick auf den Rand, der an die seitliche Öffnung angelegt wird, eine Beschwerung der Kapsel durch Restflüssigkeit erhalten werden, die eine Ausgabe der Kapsel nach dem Brühvorgang und Zufuhr der Kapsel zu einem Sammelbehälter erleichtert. Dies erhöht die Prozesssicherheit und vermeidet die Vorsehung eines aufwändigen Auswerfmechanismus.

Die Ebene des Randes der seitlichen Öffnung ist vorzugsweise in einem Winkel zwischen 5° und 45°, insbesondere 10° bis 30°, zur Vertikalen ausgerichtet. Dabei kann ein Schacht zur Zufuhr der Kapsel zu der seitlichen Öffnung ebenfalls geneigt zur Vertikalen ausgerichtet sein, vorzugsweise ist die Neigung des Schachtes in einem ähnlichen oder identischen Winkel wie die Ebene der seitlichen Öffnung ausgerichtet. Die Neigung der Öffnung und optional des Schachtes ist dabei so ausgerichtet, dass sich der Schacht und die Öffnung nach oben hin seitlich von einem Mittelpunkt der Brühkammer entfernt, also eine vertikale Linie und eine Linie in Längsrichtung des Schachtes nach oben aufspreizend angeordnet sind.

In einer bevorzugten Ausgestaltung ist in der Brühposition ein unterer Bereich eines Randes der seitlichen Öffnung als Schwelle ausgebildet, von der zur einen Seite hin die Brühkammer abfallend ausgebildet ist und von der zu der anderen Seite eine Wand der Kapsel abfallend angeordnet ist. Dadurch kann eine definierte Menge an Restflüssigkeit in der Kapsel bei Ausgabe des Brühgetränkes gesammelt werden, die aufgrund der Neigung einer unteren Wand der Kapsel nicht mehr zeitverzögert zum Ablauf geleitet wird, sondern in der Kapsel verbleibt. Durch die Restflüssigkeit wird das Gewicht der Kapsel bei der Entfernung der Kapsel aus der Brühposition erhöht, beispielsweise zwischen 1 g bis 10 g, so dass ein Auswerfen mittels Schwerkraft optimiert wird und ein Anhaften oder Verklemmen der Kapsel vermieden werden kann.

Die Kapsel ist vorzugsweise topfförmig ausgebildet und weist an einer Oberseite einen Rand auf, der abgedichtet an einen Rand an der seitlichen Öffnung anlegbar ist. Hierfür kann an dem Rand der seitlichen Öffnung der Brühkammer eine entsprechende Dichtung vorgesehen sein. Ferner ist vorzugsweise an der Kapsel ein Filterelement, beispielsweise ein Sieb, vorgesehen, das zwar eine Fluidverbindung zwischen einem Innenraum der Kapsel und einem Innenraum der Brühkammer herstellt, aber das Extraktionsmaterial innerhalb der Kapsel hält. An einem Boden der Kapsel ist vorzugsweise eine Codierung vorgesehen, die über ein Lesegerät erfassbar oder auslesbar ist, um unterschiedliche Typen von Kapseln zu identifizieren und dadurch beispielsweise die Brühzeit oder die Wassertemperatur steuern zu können.

Bei dem erfindungsgemäßen Verfahren wird eine Kapsel an einer seitlichen Öffnung einer Brühkammer positioniert, wobei ein Rand der seitlichen Öffnung eine Ebene ausbildet, die geneigt zur Vertikalen ausgerichtet ist, beispielsweise in einem Winkel zwischen 5° bis 45°, insbesondere 10° bis 30°, wobei eine Fluidverbindung zwischen einem Innenraum der Kapsel und einem Innenraum der Brühkammer hergestellt wird. Anschließend wird heißes Wasser in die Brühkammer eingeleitet, um ein Getränk zu brühen, das nach einer Ziehzeit, beispielsweise zwischen 1 min und 5 min, aus der Brühkammer an einen Ablauf abgelassen wird, um das Brühgetränk auszugeben. Durch die geneigte Anordnung der Kapsel kann bei der Getränkeausgabe ein zeitverzögertes Nachfließen verringert oder vermieden werden, und zudem kann die Restflüssigkeit in der Kapsel genutzt werden, um das Entfernen derselben von der Brühposition zu vereinfachen. Die Menge an Restflüssigkeit nach der Ausgabe des Brühvorganges beträgt vorzugsweise zwischen 1 ml und 10 ml, insbesondere 2 ml bis 6 ml.

Die Erfindung wird nachfolgend anhand eines Ausführungsbeispiels mit Bezug auf die beigefügten Zeichnungen näher erläutert. Es zeigen:

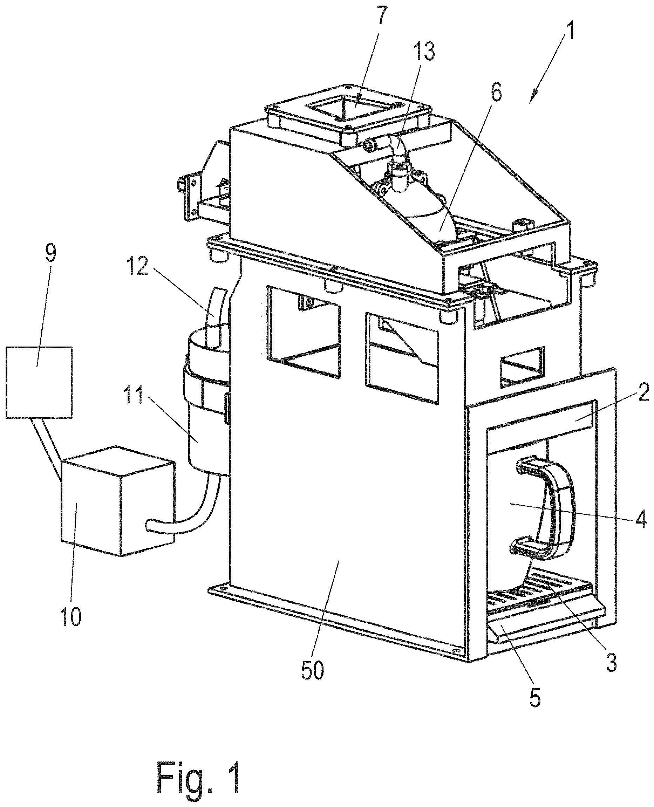

- Figur 1: eine perspektivische Ansicht einer erfindungsgemäßen Vorrichtung zur Zubereitung eines Brühgetränks;
- Figur 2: eine Schnittdarstellung der Vorrichtung der Figur 1 ohne Gehäuse, und
- Figur 3: eine geschnittene Detailansicht der Brühkammer mit einer Kapsel in der Brühposition.

Eine Vorrichtung 1 zur Zubereitung von Brühgetränken umfasst einen herausnehmbaren Sammelbehälter 2, der in einem Gehäuse 50 angeordnet ist. Der Sammelbehälter 2 besteht vorzugsweise aus zwei Teilen: einem Behälter mit wasserdurchlässigem Boden zum Auffangen von Kapseln und einem darunterliegenden Behälter zum Sammeln von Wasser. An dem Sammelbehälter 2 ist eine Auflage 3 mit Öffnungen zum Abstellen eines Gefäßes 4 angeordnet. Unterhalb der Auflage 3 ist ein Griffabschnitt 5 zum Herausziehen des Sammelbehälters 2 vorgesehen.

Die Vorrichtung 1 zur Zubereitung von Brühgetränken umfasst ferner eine Brühkammer 6, die neben einem Schacht 7 zum Einwerfen einer Kapsel vorgesehen ist.

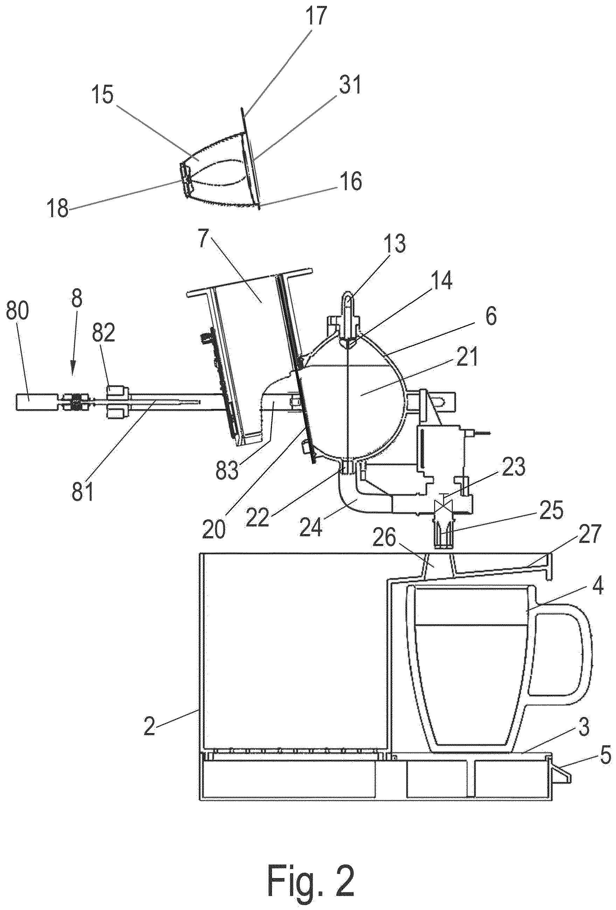

Wie in Figur 2 gezeigt ist, befindet sich der Schacht 7 für Kapseln zwischen der Brühkammer 6 und einer Antriebseinrichtung 8. Über die Antriebseinrichtung 8 kann die Brühkammer 6 relativ zu dem Schacht 7 verfahren werden. Hierfür ist ein Elektromotor 80 vorgesehen, der über ein Getriebe eine Spindel 81 antreibt, auf der eine Spindelmutter 82 drehfest gelagert ist. Durch Drehen der Spindel 81 werden mit der Spindelmutter 82 verbundene Arme 83 linear verfahren. Die Arme 83 umgreifen die Brühkammer 6 an gegenüberliegenden Seiten und sind linear geführt. Die Brühkammer 6 ist dadurch linear oder entlang einer Kurvenführung relativ zu dem Gehäuse 50 bewegbar, wobei auch andere Antriebe eingesetzt werden können.

Die Vorrichtung 1 zur Zubereitung von Brühgetränken umfasst ferner einen schematisch dargestellten Tank 9 für Frischwasser, der abnehmbar ausgebildet sein kann. Der Tank 9 ist mit einer Pumpe 10 verbunden, über die eine Heizeinrichtung 11 in Form eines Boilers gespeist wird. Von der Heizeinrichtung 11 führt eine Leitung 12, die in Figur 2 nur teilweise dargestellt ist, zu einer Einlassleitung 13 oberhalb der Brühkammer 6. Zwischen der Einlassleitung 13 und dem Tank 9 kann optional auch ein Filter vorgesehen sein.

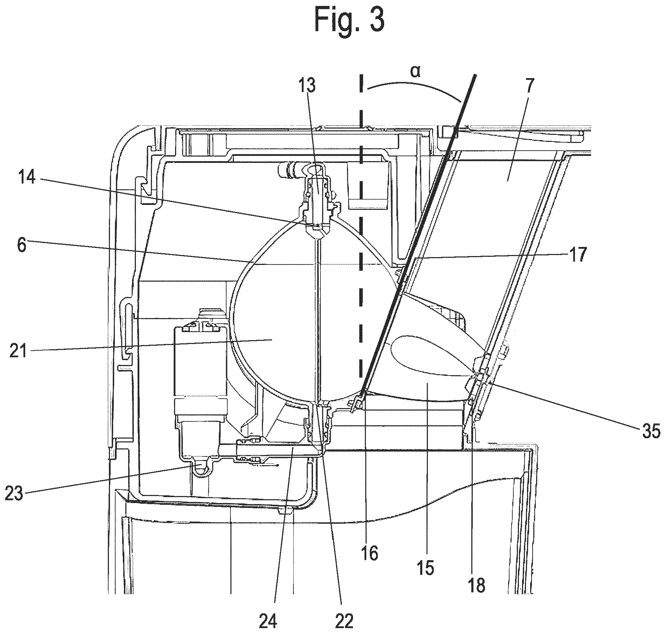

In Figur 3 ist die Vorrichtung 1 in einer schematischen Schnittansicht dargestellt. Oberhalb des Schachtes 7 ist eine Kapsel 15 vorgesehen, die topfförmig ausgebildet ist und an einer Seite eine Öffnung aufweist, die mit einem Sieb 31 oder einem Filter verschlossen ist. Das Sieb 31 ist dabei an einem Rand 16 fixiert, der asymmetrisch ausgebildet ist und an einer Seite einen hervorstehenden Abschnitt 17 als Griffbereich aufweist. Durch ebenfalls asymmetrische Führungsmittel an einer seitlichen Wand der Kapsel 15 wird diese in einer vorbestimmten Position und Ausrichtung in den Schacht 7 eingeworfen und geführt, der entsprechende Führungsmitteln für die Positionierung der Kapsel 15 aufweist. Der Schacht 7 ist dabei zur Vertikalen geneigt ausgerichtet und erstreckt sich nach unten zur Brühkammer 6 hin.

Auf der zur Öffnung gegenüberliegenden Seite weist die Kapsel 15 einen Boden 18 auf, an dem Markierungen oder Codierungen zur Identifizierung der Kapsel 15 angeordnet sind. Solche Markierungen können als Farbcodierung, optische Codierung, elektromagnetische Codierung oder sonst wie ausgebildet sein, um in einer vorbestimmten Position einen bestimmten Kapseltyp zu identifizieren. Durch ein Auslesen der Codierung der Kapsel 15 an der Vorrichtung kann über eine Steuerung die Füllmenge an heißem Wasser für die Brühkammer 6, die Temperatur und/oder die Verweilzeit eingestellt werden. Auch die Steuerung anderer Parameter über die Codierung ist möglich.

Für den Brühvorgang wird die Kapsel 15 zunächst oben in den Schacht 7 eingefügt. Die Kapsel 15 gleitet nach unten, bis sie an einer seitlichen Öffnung 20 der Brühkammer 6 angeordnet ist, die in Einwurfposition steht. Hierfür sind an der Außenseite der Brühkammer 6 Halter 19 vorgesehen, die verhindern, dass die Kapsel 15 über die Brühposition an der Öffnung 20 nach unten rutscht. Anschließend wird die Brühkammer 6 in die Brühposition gebracht, dabei ist sie mit einer Dichtung um die Öffnung 20 gegen den Rand 16 der Kapsel 15 verfahren, um für eine Abdichtung zu sorgen. Die Kapsel 15 und ein Innenraum 21 der Brühkammer 6 bilden somit eine durchströmbare Einheit, wobei die Kapsel 15 außerhalb der Brühkammer angeordnet ist und der Innenraum 21 der Brühkammer 6 und das Innere der Kapsel 15 durch das Sieb 31 voneinander getrennt sind. Der Innenraum 21 der Brühkammer 6 ist dabei ein Vielfaches größer als ein Innenraum der Kapsel 15, beispielsweise um mehr als vier mal so groß, so dass das Brühgetränk sich vorwiegend in der Brühkammer 6 befindet und nur ein kleinerer Teil in der Kapsel 15.

In der Brühposition wird nun über die Einlassleitung 13 als Zulauf heißes Wasser aus der Heizeinrichtung 11 in die Brühkammer 6 eingeleitet, wobei hierfür am Ende der Einlassleitung 13 eine Düse 14 vorgesehen ist, die mit einer Spitze in den Innenraum 21 der Brühkammer 6 hervorsteht und mittels der heißes Wasser für den Brühvorgang oder für den Spülvorgang eingeleitet wird. Die Düse 14 weist hierfür über den Umfang verteilt mehrere Öffnungen auf, durch die das heiße Wasser in die Brühkammer 6 eingespritzt werden kann. Dadurch wird an den Seitenwänden der Brühkammer 6 ein Flüssigkeitsfilm gebildet, der einerseits zum Spülen und andererseits für den Brühvorgang genutzt werden kann. Zudem ist mindestens eine Öffnung nach unten an der Düse 14 vorgesehen, durch die heißes Wasser eingespritzt werden kann, beispielsweise wenn heißes Wasser während des Brühvorganges nachgefüllt werden soll. In einer weiteren Ausführungsform ist die zusätzliche Öffnung der Düse diagonal in Richtung der Kapsel in Brühposition ausgeführt, wie es in Figur 3 dargestellt ist. Die Öffnungen können dabei optional über Ventile schaltbar ausgebildet sein.

Die Brühkammer 6 weist am unteren Ende einen Ablauf 22 oder Auslass auf, der über eine Leitung 24 mit einem Ventil 23 verbunden ist. Durch Schließen des Ventils 23 wird das eingeleitete heiße Wasser in der Brühkammer 6 gesammelt und steigt über den Ablauf 22 an, um das in der Kapsel 15 enthaltene Material zum Brühen eines Getränkes, insbesondere Tee, zu erreichen. Durch ein vorheriges Auslesen der Codierung an der Kapsel 15 durch ein Lesegerät 35 kann über die Steuerung die Zubereitung des Brühgetränkes individuell angepasst werden, beispielsweise kann grüner Tee anders zubereitet werden als schwarzer Tee, Früchtetee oder ein anderes Brüh- oder Aufgussgetränk. Zudem kann über das Auslesen der Codierung ein Reinigungsprogramm oder ein Serviceprogramm gestartet werden.

Nach dem Brühvorgang kann das Ventil 23 geöffnet werden, damit das Brühgetränk aus der Brühkammer 6 über den Ablauf 22, die Leitung 24 in einen Auslassstutzen 25 strömt, von dem es in ein Gefäß 4 eingeleitet wird. In der Brühposition befindet sich zwischen dem Auslassstutzen 25 und dem Gefäß 4 eine Durchführung 26 bzw. eine Öffnung, so dass das heiße Getränk ungehindert in das Gefäß 4 einströmen kann. Nach der Ausgabe des Brühgetränks kann das Ventil 23 wieder geschlossen werden.

Nach der Ausgabe des Getränkes kann die Brühkammer 6 über die Antriebseinrichtung 8 von der Kapsel 15 weg verfahren werden, so dass die Kapsel 15 aus der Halteposition benachbart zu der seitlichen Öffnung 20 an der Brühkammer 6 entfernt wird. Dabei wird sie zunächst noch von den Haltern an der Brühkammer gehalten, verkippt aber mit zunehmender Verfahrung der Brühkammer relativ zum Schacht 7 und fällt schließlich kontrolliert und reproduzierbar nach unten herab. Die Kapsel 15 fällt dabei in den Sammelbehälter 2 auf ein Sieb oder ein Gitter, das oberhalb eines Sammelbeckens angeordnet ist. Durch das Verfahren der Brühkammer 6 werden gleichzeitig auch das Ventil, die Leitung 24 und der Auslassstutzen 25 verfahren, der nun nicht mehr über der Durchführung 26, sondern über einem Leitelement 27 angeordnet ist. Nun kann die Brühkammer 6 gespült werden, indem heißes Wasser aus der Heizeinrichtung 11 über die Düse 14 in die Brühkammer 6 eingespritzt wird, so dass das heiße Wasser Rückstände des Brühvorganges entfernen kann. Das heiße Wasser kann dabei teilweise durch die Öffnung 20 in den Sammelbehälter 2 direkt eingeleitet werden und wird ansonsten über den Ablauf 22 und die Leitung 24 in den Auslassstutzen 25 eingeleitet. Von dort gelangt das Spülwasser auf das Leitelement 27, das als schräger Boden oberhalb des Gefäßes 4 ausgebildet ist. Über das Leitelement 27 gelangt das Spülwasser in ein Sammelbecken 28 des Sammelbehälters 2. Das Leitelement 27 kann statt als schräger Boden auch als Kanal oder Rinne ausgebildet sein.

Wird nach der Entnahme des Gefäßes 4 eine geringe Menge an Flüssigkeit durch den Durchlass 26 eingeleitet, kann diese Flüssigkeit in einem zweiten Sammelbecken oder einer Tropfschale gesammelt werden. Der Sammelbehälter 2 kann als Einheit aus dem Gehäuse 50 der Vorrichtung 1 entnommen werden, so dass die beiden Sammelbecken an dem Sammelbehälter 2 entleert werden können.

Die Brühkammer 6 ist im Wesentlichen kugelförmig ausgebildet und weist im oberen Bereich einen parabelförmigen Abschnitt auf, an dem die Düse 14 vorgesehen ist.

Die Brühkammer 6 kann ein Volumen zwischen 0,1 bis 1,0 l, insbesondere 0,15 l bis 0,7 l, aufnehmen, je nachdem, wie viele Portionen des Brühgetränks auf einmal zubereitet werden sollen.

Durch die elektrische Antriebseinrichtung 8 kann die Kapsel 15 nach dem Brühvorgang automatisch ausgeworfen werden. Dadurch kann nach jedem Brühvorgang ein Spülvorgang eingeleitet werden, so dass verhindert wird, dass die Oberfläche der Brühkammer 6, des Ablaufes 22 und der Leitung 24 verschmutzt. Das Spülen kann automatisch direkt nach dem Brühvorgang durchgeführt werden, ohne dass der Benutzer den Spülvorgang auslösen muss.

Die Kapsel 15 weist einen Innenraum auf, der über ein Sieb 31 oder ein Gitter verschlossen ist. Um das Aroma des Inhalts der Kapsel länger zu erhalten, kann das Sieb 31 oder das Gitter mit einer Abdeckfolie verschlossen sein, die an dem Rand 16 festgelegt ist und vor dem Einwerfen in den Schacht 7 ganz oder teilweise entfernt wird. An dem gegenüberliegend angeordneten Boden 18 kann mindestens eine Lichtumlenkvorrichtungen sowie mindestens eine Auskoppelfläche vorgesehen sein, die für ein optisches Erkennungssystem eingesetzt werden. An dem Boden 18 können Lichtleiter vorgesehen sein, so dass über mindestens einen Lichtdetektor das Emittieren von Licht in den Boden 18 der Kapsel 15 erfasst werden kann.

In dem dargestellten Ausführungsbeispiel ist die Brühkammer 6 einwandig ausgebildet, beispielsweise aus Kunststoff, Metall oder Glas. Es ist aber auch möglich, die Brühkammer 6 zur Erhöhung der Temperaturbeständigkeit zu isolieren, beispielsweise mit einer Umhüllung aus Isoliermaterial oder durch eine doppelwandige Ausbildung. Dann kann das Brühgetränk auch bei langen Ziehzeiten von beispielsweise über 5 Minuten ausreichend temperiert ausgegeben werden.

In Figur 3 ist eine Kapsel 15 durch den geneigt angeordneten Schacht 7 in eine Brühposition bewegt worden. Der Rand 16 der Kapsel liegt abgedichtet an einem Rand der seitlichen Öffnung 20 an, wobei der seitliche Rand der Öffnung 20 in einem Winkel α zur Vertikalen geneigt ausgerichtet ist, der beispielsweise zwischen 10° und 30° beträgt, insbesondere zwischen 15° und 25°.

Für einen Brühvorgang wird über die Einlassleitung 13 als Zulauf heißes Wasser in den Innenraum 21 der Brühkammer 6 eingeleitet, wobei durch einen Filter an der Kapsel 15 das heiße Wasser auch in einen Innenraum der Kapsel 15 strömt. Das Extraktionsmaterial in der Kapsel 15 kann nun eine gewünschte Zeit ziehen, beispielsweise zwischen 1 min und 8 min, und anschließend wird das Brühgetränk über den Ablauf 22 und die Leitung 24 in ein Gefäß 4 abgegeben. Ein unterer Rand an der seitlichen Öffnung 20 bildet dabei eine Schwelle aus, die höher angeordnet ist als eine untere Wand der Kapsel 15 und ein unterer Bereich der Brühkammer 6. Dadurch verbleibt eine definierte Menge an Restflüssigkeit in der Kapsel 15, beispielsweise zwischen 1 ml und 10 ml, die das Gewicht der Kapsel 15 erhöht, so dass nach Beendigung des Brühvorganges die Kapsel 15 leichter entfernt und in den Sammelbehälter 2 durch Schwerkraft ausgeworfen werden kann. Etwaige Adhäsionskräfte, beispielsweise an dem Rand der Kapsel 15, werden durch das Gewicht der Kapsel 15 nach dem Brühvorgang überwunden und sorgen für ein zuverlässiges Herunterfallen der Kapsel 15 aus der Brühposition. Zudem wird vermieden, dass benetztes Extraktionsmaterial zeitverzögert Restflüssigkeit in die Brühkammer 6 ableitet, was zu einer erhöhten Konzentration an Bitterstoffen in dem Brühgetränk führen kann.

### Bezugszeichenliste

- 1: Vorrichtung
- 2: Sammelbehälter
- 3: Auflage
- 4: Gefäß
- 5: Griffabschnitt
- 6: Brühkammer
- 7: Schacht
- 8: Antriebseinrichtung
- 9: Tank
- 10: Pumpe
- 11: Heizeinrichtung
- 12: Leitung
- 13: Einlassleitung
- 14: Düse
- 15: Kapsel
- 16: Rand
- 17: Abschnitt
- 18: Boden
- 19: Halter
- 20: Öffnung
- 21: Innenraum
- 22: Ablauf
- 23: Ventil
- 24: Leitung
- 25: Auslassstutzen
- 26: Durchführung
- 27: Leitelement
- 28: Sammelbecken
- 31: Sieb
- 50: Gehäuse
- 80: Elektromotor
- 81: Spindel
- 82: Spindelmutter
- 83: Arm

- α: Winkel

## Patentansprüche

1. Vorrichtung (1) zur Herstellung eines Brühgetränks, mit einer Brühkammer (6), die einen Zulauf (13) für heißes Wasser und einen Ablauf (22) aufweist, wobei an dem Ablauf (22) ein Verschlusselement (23) vorgesehen ist, mittels dem der Ablauf (22) geöffnet oder geschlossen werden kann, und die Brühkammer (6) eine seitliche Öffnung (20) aufweist, an der eine Kapsel (15) mit einem Extraktionsmaterial abgedichtet anlegbar ist, um eine Fluidverbindung zwischen einem Innenraum der Kapsel und einem Innenraum der Brühkammer herzustellen, **dadurch gekennzeichnet, dass** ein Rand der seitlichen Öffnung (20) eine Ebene ausbildet, die geneigt zur Vertikalen ausgerichtet ist.

2. Vorrichtung nach Anspruch 1, **dadurch gekennzeichnet, dass** die Ebene in einem Winkel α zwischen 5° und 45°, insbesondere 10° bis 30°, zur Vertikalen ausgerichtet ist.

3. Vorrichtung nach Anspruch 1 oder 2, **dadurch gekennzeichnet, dass** ein Schacht (7) zur Zufuhr einer Kapsel (15) zu der seitlichen Öffnung (20) vorgesehen ist, der geneigt zur Vertikalen ausgerichtet ist.

4. Vorrichtung nach Anspruch 3, **dadurch gekennzeichnet, dass** der Schacht (7) im Wesentlichen die gleiche Neigung besitzt wie die Ebene der seitlichen Öffnung (20).

5. Vorrichtung nach einem der vorhergehenden Ansprüche, **dadurch gekennzeichnet, dass** in der Brühposition ein unterer Bereich eines Randes um die seitliche Öffnung (20) eine Schwelle ausbildet, von der zu einer Seite hin die Brühkammer (6) abfallend ausgebildet ist und von der zu der gegenüberliegenden Seite eine Wand der Kapsel (15) abfallend angeordnet ist.

6. Vorrichtung nach einem der vorhergehenden Ansprüche, **dadurch gekennzeichnet, dass** die Kapsel (15) topfförmig ausgebildet ist.

7. Vorrichtung nach einem der vorhergehenden Ansprüche, **dadurch gekennzeichnet, dass** an einem Boden der Kapsel (15) eine Codierung vorgesehen ist, die über ein Lesegerät erfassbar ist, um unterschiedliche Typen von Kapseln (15) zu identifizieren.

8. Vorrichtung nach einem der vorhergehenden Ansprüche, **dadurch gekennzeichnet, dass** die Kapsel (15) in der Brühposition einen unteren Abschnitt aufweist, der tiefer angeordnet ist als eine untere Stelle der seitlichen Öffnung (20).

9. Vorrichtung nach einem der vorhergehenden Ansprüche, **dadurch gekennzeichnet, dass** die Kapsel (15) einen flüssigkeitsdurchlässigen Filter (31) oder ein Sieb aufweist, der den Innenraum der Brühkammer (6) von dem Innenraum der Kapsel (15) trennt.

10. Verfahren zur Herstellung eines Brühgetränkes, mit den folgenden Schritten:
- Positionieren einer Kapsel (15) an einer seitlichen Öffnung (20) einer Brühkammer (6), wobei ein Rand der seitlichen Öffnung (20) eine Ebene ausbildet, die geneigt zur Vertikalen ausgerichtet ist und eine Fluidverbindung zwischen einem Innenraum der Kapsel (15) und der Brühkammer (6) hergestellt ist;
- Einleiten von heißem Wasser in die Brühkammer (6);
- Brühen eines Getränkes;
- Öffnen eines Verschlusselementes (23) an einem Ablauf (22), und
- Ausgabe des Brühgetränkes.

11. Verfahren nach Anspruch 10, **dadurch gekennzeichnet, dass** nach der Ausgabe des Brühgetränkes eine Restflüssigkeit in der Kapsel (15) verbleibt und die Kapsel (15) mittels Schwerkraft in einen Sammelbehälter ausgeworfen wird.

12. Verfahren nach Anspruch 11, **dadurch gekennzeichnet, dass** das Volumen der Restflüssigkeit zwischen 1 ml bis 10 ml, insbesondere 2 ml bis 5 ml, beträgt.

## Claims

1. Device (1) for producing a brewed beverage, having a brewing chamber (6) which has an inlet (13) for hot water and an outlet (22), wherein a closure element (23) is provided on the outlet (22) by means of which the outlet (22) can be opened or closed, and the brewing chamber (6) has a lateral opening (20) to which a capsule (15) with an extraction material can be applied in a sealed manner in order to produce a fluid connection between an interior of the capsule and an interior of the brewing chamber, **characterized in that** an edge of the lateral opening (20) forms a plane which is oriented inclined to the vertical.

2. Device according to claim 1, **characterized in that** the plane is oriented at an angle α between 5° and 45°, in particular 10° to 30°, to the vertical.

3. Device according to claim 1 or 2, **characterized in that** a shaft (7) for supplying a capsule (15) to the lateral opening (20) is provided, which is oriented inclined to the vertical.

4. Device according to claim 3, **characterized in that** the shaft (7) has substantially the same inclination as the plane of the lateral opening (20).

5. Device according to one of the preceding claims, **characterized in that** in the brewing position a lower region of an edge forms a threshold around the lateral opening (20), from which the brewing chamber (6) is designed to slope down towards one side and from which a wall of the capsule (15) is arranged to slope down towards the opposite side.

6. Device according to one of the preceding claims, **characterized in that** the capsule (15) is arranged in a pot-shaped manner.

7. Device according to one of the preceding claims, **characterized in that** a coding is provided at a bottom of the capsule (15), which coding can be detected by a reader in order to identify different types of capsules (15).

8. Device according to one of the preceding claims, **characterized in that,** in the brewing position, the capsule (15) has a lower section which is arranged lower than a lower point of the lateral opening (20).

9. Device according to one of the preceding claims, **characterized in that** the capsule (15) has a liquid-permeable filter (31) or sieve which separates the interior of the brewing chamber (6) from the interior of the capsule (15).

10. Method for preparing a brewed beverage, comprising the following steps:
- positioning a capsule (15) at a lateral opening (20) of a brewing chamber (6), wherein an edge of the lateral opening (20) forms a plane which is oriented inclined to the vertical and a fluid connection is established between an interior space of the capsule (15) and the brewing chamber (6);
- feeding hot water into the brewing chamber (6);
- brewing a beverage;
- opening a closure element (23) on an outlet (22), and
- dispensing the brewed beverage.

11. Method according to claim 10, **characterized in that** after the brewed beverage has been dispensed, a residual liquid remains in the capsule (15) and the capsule (15) is ejected by gravity into a collecting container.

12. Method according to claim 11, **characterized in that** the volume of the residual liquid is between 1 ml and 10 ml, in particular 2 ml to 5 ml.

## Revendications

1. Dispositif (1) pour préparer une infusion comprenant une chambre d'infusion (6) munie d'une arrivée d'eau chaude (13) et d'une sortie (22), l'arrivée (22) ayant un élément de fermeture (23) à l'aide duquel on ouvre et on ferme la sortie (22) et la chambre d'infusion (6) a une ouverture latérale (20) contre laquelle s'applique de manière étanche une capsule (15) contenant un produit d'extraction pour réaliser une liaison fluidique entre le volume intérieur de la capsule et le volume intérieur de la chambre d'infusion,
dispositif **caractérisé en ce que**
le bord de l'ouverture latérale (20) est dans un plan incliné par rapport à la direction verticale.

2. Dispositif selon la revendication 1,
**caractérisé en ce que**
le plan fait un angle α compris entre 5° et 45°, notamment entre 10° et 30° par rapport à la direction verticale.

3. Dispositif selon la revendication 1 ou 2,
**caractérisé en ce qu'**il comprend :
un puits (7) pour fournir une capsule (15) à l'orifice latéral (20), ce puits étant incliné par rapport à la direction verticale.

4. Dispositif selon la revendication 3,
**caractérisé en ce que**
le puits (7) a pratiquement la même inclinaison que le plan de l'orifice latéral (20).

5. Dispositif selon l'une des revendications précédentes,
**caractérisé en ce que**
en position d'infusion, la zone inférieure du bord de l'orifice latéral (20) forme un seuil à partir duquel, la chambre d'infusion (6) descend d'un côté et à partir duquel, la paroi de la capsule (15) est descendante, sur le côté opposé.

6. Dispositif selon l'une des revendications précédentes,
**caractérisé en ce que**
la capsule (15) est en forme de pot.

7. Dispositif selon l'une des revendications précédentes,
**caractérisé en ce que**
le fond de la capsule (15) comporte un codage saisi par un appareil de lecture pour identifier différents types de capsule (15).

8. Dispositif selon l'une des revendications précédentes,
**caractérisé en ce que**
la capsule (15) en position d'infusion a un segment inférieur qui en-dessous de la position inférieure de l'orifice latéral (20).

9. Dispositif selon l'une des revendications précédentes,
**caractérisé en ce que**
la capsule (15) comporte un filtre (31) ou un tamis perméable aux liquides et séparant le volume intérieur de la chambre d'infusion (6) par rapport au volume intérieur de la capsule (15).

10. Procédé de préparation d'une infusion comprenant les étapes suivantes consistant à :
- positionner une capsule (15) contre une ouverture latérale (20) d'une chambre d'infusion (6), le bord de l'ouverture latérale (20) formant un plan incliné par rapport à la direction verticale et on réalise une liaison fluidique entre le volume intérieur de la capsule (15) et la chambre d'infusion (6),
- introduire de l'eau chaude dans la chambre d'infusion (6) ;
- infuser l'infusion,
- ouvrir l'élément de fermeture (23) à la sortie (22) et distribuer l'infusion.

11. Procédé selon la revendication 10,
**caractérisé en ce que**
après la distribution de l'infusion, il subsiste du liquide résiduel dans la capsule (15) et cette capsule (15) est éjectée par la gravité dans un collecteur.

12. Procédé selon la revendication 11,
**caractérisé en ce que**
le volume du liquide résiduel est compris entre 1 ml et 10 ml, notamment entre 2 ml et 5 ml.
